# EUROPEAN PATENT SPECIFICATION

(11) **EP 1 984 255 B1**
(45) Date of publication and mention of the grant of the patent: **28.10.2009**
(21) Application number: 07713026.8
(22) Date of filing: 08.02.2007
(51) Int. Cl.: B65B 35/16, B65B 35/26, B65B 35/58, B65G 47/84

(54) **DEVICE FOR MOVING AND ORIENTATING AN ARTICLE TO BE WRAPPED**
VORRICHTUNG ZUM BEWEGEN UND AUSRICHTEN EINES EINZUPACKENDEN ARTIKELS
DISPOSITIF POUR DEPLACER ET ORIENTER UN ARTICLE DESTINE A ETRE EMBALLE

(30) Priority: 09.02.2006 IT BO20060077
(43) Date of publication of application: 29.10.2008
(73) Proprietor: SACMI Packaging S.p.A., 40026 Imola (BO) (IT)
(72) Inventor: FRABETTI, Fabio, 40123 Bologna (IT); BARALDI, Luca, 40133 Bologna (IT); RAMINI, Umberto, 40127 Bologna (IT)
(74) Representative: Negrini, Elena
(86) International application number: PCT/IB2007/000304
(87) International publication number: WO 2007/091161

(56) References cited:
- EP-A1- 0 608 823
- WO-A-02/06123
- DE-C1- 19 616 989
- GB-A- 2 220 187
- JP-A- 7 002 359
- JP-A- 11 263 436
- JP-A- 62 079 922

## Description

### TECHNICAL FIELD

The present invention relates to the packaging field and it refers to a device for moving an article to be wrapped, for example to transfer from a conveyor to a raising and wrapping means of a wrapping machine chocolates even very delicate and relatively bulky, such as those chocolate-coated cherry with liqueur also called "boeri" which are traditionally wrapped in a manner aesthetically similar to a candy with a kind of upper twist.

### BACKGROUND ART

In the non specialized known wrapping machine, in order to carry out various wrappers of various kinds of products, it is necessary to utilize pliers mounted on vertical axis wheels.

Said known wheels have the drawback that they do not orient in a proper manner the products to wrap in the style of chocolate-coated cherry with liqueur wrapper.

Other drawback of said known wheels consists in that their conformation cannot make possible the automatic positioning of a wrapping sheet above the product because they cannot provide sufficient space to the members for said positioning members.

Further drawback of said known pliers wheels consists in that they can have an excessive stressing handling and can lose the handling synchronism with the risks of damaging the articles to be wrapped and damaging the machine.

Document JP 11 263436A discloses a device for moving an article to be wrapped by means of a machine, comprising a support body centrally fixed on a vertical rotation shaft. The device is provided with pliers means connected, for turning with it, to the support body and provided with at least two jaws and with opening means connected to at least one of the jaws to hold and to release the article. At least one pliers means is connected to the support body by means of respective rotation means for rotating said at least one pliers means and the article hold thereby, around an axis radial in respect to the support body. When the article, in a predetermined inlet position facing the at least one pliers means, is positioned between the jaws of said opened pliers means, at least one of said jaws takes it following the closure of said at least one of said jaws made by the opening means. The support body and the rotation means rotate the at least one pliers means and the article respectively around the vertical axis and the radial axis of the support body until the article reaches a predetermined position and a predetermined outlet orientation, in said predetermined position and orientation the opening means opens the pliers means releasing the article correctly positioned for successive workings. Each of the documents JP 62 079922 and EP 0 608 823 discloses a device that differs from the above described one in that the rotation shaft of the support body in an operative condition is horizontal.

### DISCLOSURE OF THE INVENTION

An object of the present invention is to propose a device, for moving an article to be wrapped, which can be used on a known type of wrapping machine for general purpose to carry out a liqueur type chocolate-coated cherry with wrapping.

Another object is to propose a small device providing space for the positioning members of the wrapping sheet above the articles to be wrapped.

A further object is to propose a device with smooth actions and movements in order not to damage the product to be wrapped and without the risk to lose the synchronism and the movements phase.

Another object is to propose a reliable, fast and relatively simple device which can be used for various kinds of foods and non-food products and in combination with various kinds of machines and systems.

### BRIEF DESCRIPTION OF THE DRAWINGS

The characteristics of the invention are highlighted as follows with particular reference to the attached drawings, in which:
- figure 1 illustrates a schematic, partial and plain view of the device for moving an article to be wrapped of the present invention, in which some parts are removed away for better highlighting the others;
- figure 2 illustrates an axial sectioned view of the device of figure 1;
- figure 3 illustrates a partial and enlarged view of the device of figure 2;
- figures 4 and 5 illustrate enlarged views of respective parts of the device of figure 2.

### BEST MODE OF CARRYING OUT THE INVENTION

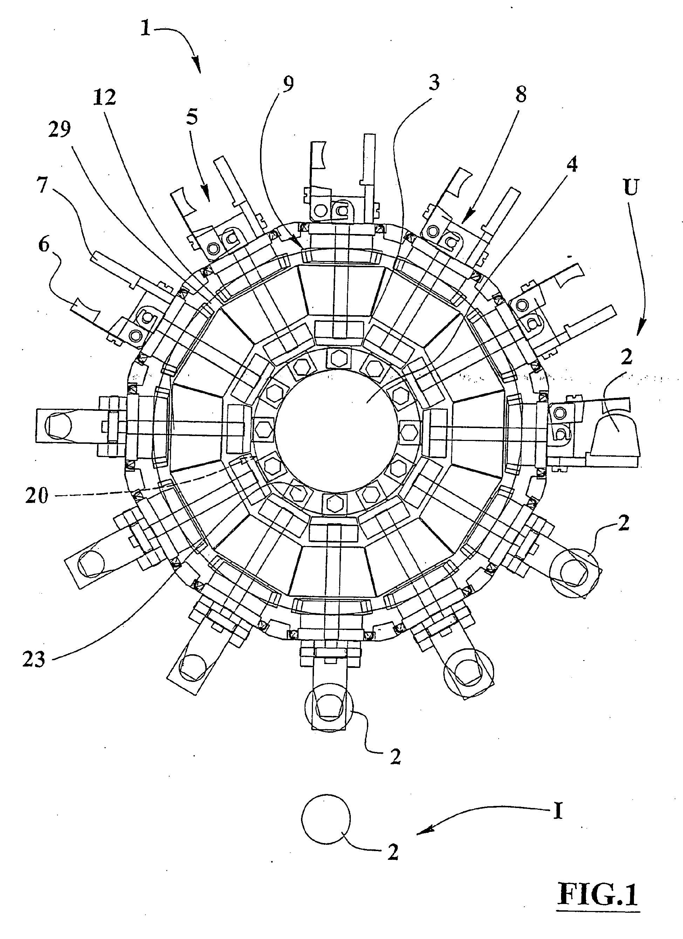

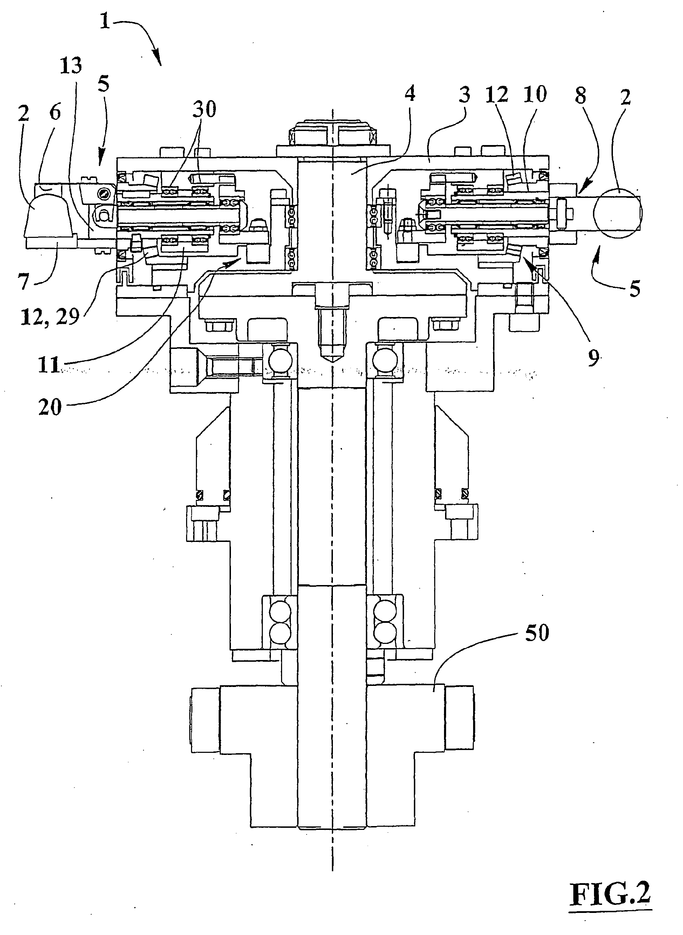

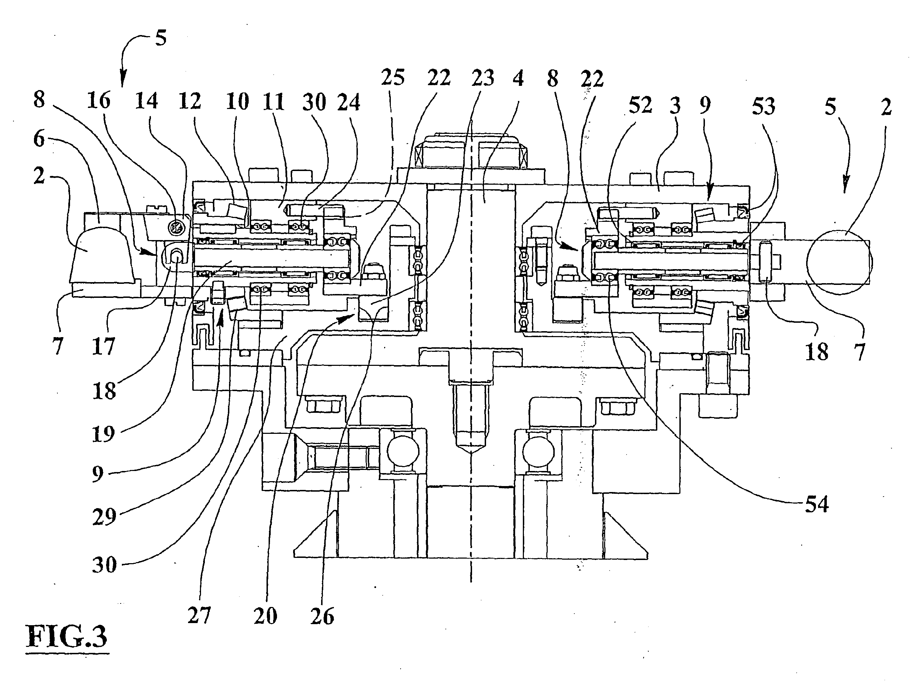

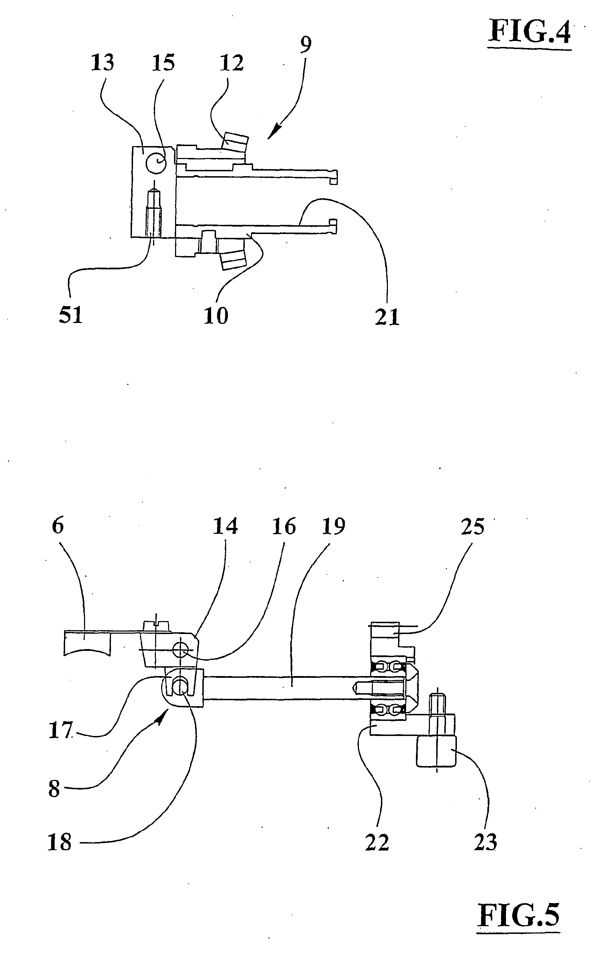

With reference to the figures 1 - 5, the numeral 1 indicates the device for moving an article 2 to be wrapped, of the present invention.

Said device 1 is fit to take the article 2, for example consisting of a chocolate-coated cherry with liqueur, and to transfer it to a wrapping machine, for example of known type to carry out various kinds of wrappers for various kinds of articles or products.

The device 1, for example, can be used as vertical axis wheel in said known type of machine. In an alternative, the device, driven appropriately, can be associated to a specialized machine or interposed between two machines or between a conveyor and a wrapping machine of known type and not shown.

The device 1 comprises a support body 3 having approximately discoidal shape and horizontally positioned or, in alternative, having cylindrical segment shape or the like.

The support body 3 is centrally fixed for example by means of fitting, on a vertical rotating shaft 4 whose lower portion has a intermittent drive 50, for example of enveloping cam type, connected to a rotation drive, and fit to transfer it in intermittent manner to the rotation shaft 4. In alternative, this shaft can be equipped with a normal gear wheel for a predetermined circular motion.

The device 1 is equipped with twelve pliers means 5 connected to the support body 3 to turn with it. Obviously the invention provides that the number of the plies means can be different, for example from one up to more than sixteen.

Each pliers means is provided with two jaws 6, 7 shaped to match with opposite faces of the article to be wrapped for example, as shown, with the upper end and the bigger base of a chocolate-coated cherry with liqueur.

To avoid interferences with the wrapping material, the pliers means 5 are long enough to receive, over themselves, the wrapping sheet and avoiding that the positioning members of said sheet can interfere with the device. In alternative, for example, the jaws 6, 7 can be in "L" shape to avoid said interference.

The upper jaw 6 comprises a flexible lamina having a fixed shaped plug to tighten the product.

The flexible lamina carries out a contrast spring acting on the product, holding it between the jaws and compensating eventual geometric differences of the product or, in particular, of the chocolate-coated cherry with liqueur.

Each pliers means is equipped with respective opening means 8 to catch and to release the article 2.

Each pliers means 5 is connected to the support body 3 by means of respective rotation means 9 for the rotating around an axis almost radial that, in this case, is horizontal and passing through the axis of the shaft 4, of said pliers means 5 and of the article caught hereby.

The rotation means 9 of the pliers means 5 comprise a rotating element 10 connected to the support body 3 by means of a respective connection means 11 with bearings 30 for the free rotation of said rotating element 10 around a radial axis.

The rotating element 10 is provided with transmission means 12 for the rotary motion around the radial axis and is also provided with support means 13 for the pliers means 5 to which they transmit said rotary motion.

Each upper jaw 6, where "upper" means that it is fit to match with the upper end of the chocolate-coated cherry with liqueur, is fixed to an external end of a "L" shaped arm 14. Said shaped arm 14 is centrally hinged, by means of a first pivot 16, to a hole 15 of the support means 13 of the rotating element 10.

The inner end of the shaped arm 14, in other words the end opposite to that having the upper jaw 6, is provided with a first joint 17 with open slots for the second joint 18, pivot shaped with ends engaged into the slots, of an external end of a rod means 19, of the opening means 8 axially driven by first cam means 20.

The jaw 7 fit to match with the support main base of the chocolate-coated cherry with liqueur or of the article to be wrapped in general, is fixed by means of screws to a threaded hole 51 of the support means 13 of the rotating element 10.

In alternative, the invention provides that also the second jaw 7 can be connected in oscillating manner to the support means 13 and driven, by means of a respective transmission, by the rod means 19 of the opening means 8. In this alternative the opening and the closing of the pliers means 5 are carried out by the mutual approaching and distancing away movement of the both jaws 6, 7.

The rod means 19 is sliding within an axial cavity 21 of the rotating element 10. The ends of said axial cavity can be equipped with sliding and/or rotation means 52 comprising such as bushing and/or bearings for the movement of the rod means with low friction.

The inner and external edges of the external end of the rotating element 10 can be equipped with respective flap seals 53 to avoid the entry of the powder or dirt.

The inner end of each rod means 19 of the opening means 8 is connected, by means of bearings 54 for the free mutual rotation, to a coupling means 22 having an idle wheel means 23 engaged to the first cam means 20.

A radial pin 24 fixed to the support body 3, for example fixed to the respective connection means 11, is constrained to slide axially into a housing 25 of the respective coupling means 22 preventing the rotation thereof and obliging it to slide in radial direction.

In alternative the radial pin 24 can be fixed to the coupling means 22 and the housing 25 can be obtained in an element rigidly fixed to the support body 3.

The transmission means 12 of the rotating element 10 consist of a first conic gear wheel engaged to a second conic gear wheel 29 of a fixed element 27 and centred on the axis of the rotation shaft 4. Therefore said first and second conic wheels have axes respectively horizontal and vertical.

The first cam means 20 comprise a profiled annular groove 26, carried out around the rotation shaft 4 in a fixed element 27 whose walls match with the idle wheel means 23 associated to each jaw commanding thus the opening and the closings thereof according to the angular position of the jaw on the horizontal plane in respect to the fixed element 27.

A possible operation of the device 1 provides that the article 2, with the support base positioned on a conveyor, not shown, is carried by this latter up to a predetermined inlet position I facing a pliers means 5.

In said inlet position I, the support body 3 is preferably immobile, the pliers means 5 is opened by the opening means 8 following a corresponding shaping of the first cam means 20 and the jaw 7, fit to match with the support main base of the article, is in the lower horizontal position. In said condition in the inlet position I, a pusher, known and not shown, pushes the article on the lower jaw 7 and under the remaining upper jaw in wide apart open position. The rotation movement of the support body, following the corresponding shaping of the first cam means, causes the closure, provided by the opening means 8, of said jaws which hold the article 2. The successive rotary motion of the shaft causes the rotations of the support body 3 and the rotation means 9 rotate the pliers means 5 with the articles 2 respectively around the vertical axis of the shaft and around a radial geometric axis, defined by a diameter of the support body, until the reaching, by the article, of the predetermined outlet position U corresponding to that of the chocolate-coated cherry with liqueur which is orientated with its axis in tangent direction in respect to the support body turned forwards in respect to the motion of this latter. In the passage from the inlet position I to the outlet position U, the chocolate-coated cherry with liqueur has passed through an angle of 90° around the vertical axis and an angle of 90° plus an integer or null number of revolution, depending on the transmission ratio of the transmission means 12 with the second gear wheel 29, around the radial horizontal axis.

In opposite manner, the opening means 8 drive the opening of the pliers means 5 releasing the article, when correctly positioned, for example on a device, called elevator, of the machine, known and not shown, or other apparatuses.

The opening means 8 carry out the opening and the closing of the pliers means 5 causing the rotation, in respect to the support means 13 of the rotating element 10, of the single upper jaw 6 which is connected to the rod means 19 by means of the shaped arm 14. Vice versa the lower jaw 7 is fixed rigidly to the support means 13 of the rotating element 10. In alternative the invention provides that both the jaws 6, 7 can be connected to, and also driven by, the rod means that rotates them in respect to the support means 13.

An advantage of the present invention is to provide a device for moving an article to be wrapped which can be used on known wrapping machines of general purpose to carry out a wrapper of "Boero" or, in other word, chocolate-coated cherry with liqueur type.

Other advantage is to provide a small device and leaving the space for the members free for the positioning of the wrapping sheets above the article to be wrapped.

Further advantage is to provide a device with smooth movements in order not to damage the product to be wrapped and without any risk to lose the synchronism and the movements phase.

Other advantage is to provide a reliable, fast and relatively simple device.

## Claims

1. Device for moving an article (2) to be wrapped by means of a machine, comprising a support body (3) centrally fixed on a vertical rotation shaft (4), the device (1) being provided with at least a pliers means (5) connected, for turning with it, to the support body (3) and provided with at least two jaws (6, 7) and with opening means (8) connected to at least one of the jaws (6, 7) to hold and to release the article (2), at least one pliers means (5) is connected to the support body (3) by means of respective rotation means (9) for rotating said at least one pliers means (5) and the article hold thereby, around an axis radial in respect to the support body (3); when the article, in a predetermined inlet position facing the at least one pliers means (5), is positioned between the jaws (6, 7) of said opened pliers means, at least one of said jaws takes it following the closure of said at least one of said jaws made by the opening means (8); the support body (3) and the rotation means (9) rotate the at least one pliers means (5) and the article (2) respectively around the vertical axis and the radial axis of the support body until the article reaches a predetermined position and a predetermined outlet orientation, in said predetermined position and orientation the opening means (8) opens the pliers means (5) releasing the article correctly positioned for successive workings; said device (1) being **characterized in that** at least one first jaw (6) of each pliers means is fixed to an end of a shaped arm (14) centrally hinged by means of a first pivot (16) and provided, on the opposite end, with a first joint (17) for a second joint (18) of an external end of a rod means (19) of the opening means (8), axially driven by first cam means (20), the inner end of said rod means (19) of the opening means (8) is connected by means of bearings in free rotating manner to a coupling means (22) having an idle wheel means (23) engaged to the first cam means (20), said coupling means (22) being constrained to radially translate by at least one radial pin (24), sliding in a housing (25) of said coupling means (22) and fixed to the support body (3) or vice versa.

2. Device according to claim 1 **characterized in that** the rotation means (9) comprise a rotating element (10) connected to the support body (3) by means of a connection means (11) provided with bearings (30) for the free rotation of said rotating element (10) around a radial axis; said rotating element (10) being provided with transmission means (12) for the motion around the radial axis and with support means (13) for the pliers means (5) to which said rotary motion is transmitted.

3. Device according to claim 2 **characterized in that** the shaped arm (14) is centrally hinged to a hole (15) for the first pivot (16) carried out in the support means (13) of the rotating element (10).

4. Device according to claim 1 **characterized in that** at least a second jaw (7) of each pliers means is fixed to the support means (13) of the rotating element (10).

5. Device according to claim 1 **characterized in that** the first jaw (6) comprises one flexible lamina fit to carry out an elastic contrast on the product.

6. Device according to claim 1 **characterized in that** the rod means (19) is sliding within one axial cavity (21) of the rotating element (10).

7. Device according to claim 2 **characterized in that** the transmission means (12) of the rotating element (10) consist in a first gear wheel engaged to a second gear wheel (29) of a fixed element (27) and whose centre lies on the axis of the rotation shaft (4).

8. Device according to claim 1 **characterized in that** the first cam means (20) comprise a profiled annular groove (26) carried out around the rotation shaft (4) in a fixed element (27) whose walls match the idle wheel means (23).

9. Device according to anyone of the preceding claims **characterized in that** it comprises at least four pliers means (5), preferably twelve.

10. Device according to claim 1 **characterized in that** the pliers means (5) are elongated or are "L" shaped in such manner so that they can receive, above themselves, a wrapping sheet avoiding that the positioning members of said sheet interfere with the device.

## Patentansprüche

1. Vorrichtung zum Bewegen eines mit Hilfe einer Maschine zu umhüllenden Gegenstandes (2) mit einem Lagerkörper (3), der zentral auf einer vertikalen Welle (4) fixiert ist, wobei die Vorrichtung (1) mit mindestens einer Zangeneinrichtung (5)versehen ist, die mit dem Lagerkörper (3) verbunden ist, um sich damit zu drehen, und mit mindestens zwei Backen (6, 7) versehen ist, und mit Öffnungseinrichtungen (8), die mit mindestens einer der Backen (6, 7) verbunden sind, um den Gegenstand (2) zu halten und freizugeben, wobei mindestens eine Zangeneinrichtung (5) mit Hilfe von entsprechenden Dreheinrichtungen (9) zum Drehen der mindestens einen Zangeneinrichtung (5) und hierdurch zum Halten des Gegenstandes um eine radiale Achse in Bezug auf den Lagerkörper (3) mit dem Lagerkörper (3) verbunden ist, wobei dann, wenn der Gegenstand in einer vorgegebenen Einlassposition gegenüber der mindestens einen Zangeneinrichtung (5) zwischen den Backen (6, 7) der geöffneten Zangeneinrichtung angeordnet ist, mindestens eine der Backen nach dem von den Öffnungseinrichtungen (8) durchgeführten Schließen der mindestens einen Backe den Gegenstand aufnimmt, und wobei der Lagerkörper (3) und die Dreheinrichtungen (9) die mindestens eine Zangeneinrichtung (5) und den Gegenstand (2) um die vertikale Achse und die radiale Achse des Lagerkörpers drehen, bis der Gegenstand eine vorgegebene Position und eine vorgegebene Auslassorientierung erreicht, wobei in der vorgegebenen Position und Orientierung die Öffnungseinrichtungen (8) die Zangeneinrichtung (5) öffnen, die den Gegenstand in einer korrekten Positionierung für nachfolgende Bearbeitungsvorgänge freigibt, **dadurch gekennzeichnet, dass** mindestens eine erste Backe (6) einer jeden Zangeneinrichtung an einem Ende eines geformten Armes (14) befestigt ist, der mit Hilfe eines ersten Drehzapfens (6) zentral gelagert und am gegenüberliegenden Ende mit einem ersten Gelenk (17) für ein zweites Gelenk (18) eines externen Endes einer Stabeinrichtung (19) der Öffnungseinrichtungen (8) versehen ist, wobei die Stabeinrichtung axial von ersten Nockeneinrichtungen (20) angetrieben wird und das innere Ende der Stabeinrichtung (19) der Öffnungseinrichtungen (8) mit Hilfe von Lagern auf frei drehbare Weise mit einer Kopplungseinrichtung (22) verbunden ist, die eine leerlaufende Radeinrichtung (23) aufweist, welche mit den ersten Nockeneinrichtungen (20) in Eingriff steht, wobei die Kopplungseinrichtung (22) durch mindestens einen Radialstift (24), der in einem Gehäuse (25) der Kopplungseinrichtung (22) gleitet und am Lagerkörper (3) fixiert ist oder umgekehrt, zu einer radialen Translationsbewegung gezwungen wird.

2. Vorrichtung nach Anspruch 1, **dadurch gekennzeichnet, dass** die Dreheinrichtungen (9) ein Drehelement (10) umfassen, das über eine Verbindungseinrichtung (11), die mit Lagern (30) für die freie Drehung des Drehelementes (10) um eine radiale Achse versehen ist, mit dem Lagerkörper (3) verbunden ist und dass das Drehelement (10) mit Übertragungseinrichtungen (12) für die Bewegung um die radiale Achse und mit Lagereinrichtungen (13) für die Zangeneinrichtung (5), auf die die Drehbewegung übertragen wird, versehen ist.

3. Vorrichtung nach Anspruch 2, **dadurch gekennzeichnet, dass** der geformte Arm (14) zentral drehbar an einem Loch (15) für den ersten Drehzapfen (16) gelagert ist, welches in den Lagereinrichtungen (13) des Drehelementes (10) ausgeführt ist.

4. Vorrichtung nach Anspruch 1, **dadurch gekennzeichnet, dass** mindestens eine zweite Backe (7) einer jeden Zangeneinrichtung an den Lagereinrichtungen (13) des Drehelementes (10) fixiert ist.

5. Vorrichtung nach Anspruch 1, **dadurch gekennzeichnet, dass** die erste Backe (6) eine flexible Lamelle aufweist, die für einen elastischen Kontrast in Bezug auf den Gegenstand sorgt.

6. Vorrichtung nach Anspruch 1, **dadurch gekennzeichnet, dass** die Stabeinrichtung (19) in einem axialen Hohlraum (21) des Drehelementes (10) gleitet.

7. Vorrichtung nach Anspruch 2, **dadurch gekennzeichnet, dass** die Übertragungseinrichtungen (12) des Drehelementes (10) aus einem ersten Zahnrad bestehen, das mit einem zweiten Zahnrad (29) eines festen Elementes (27) kämmt und dessen Zentrum auf der Achse der Welle (4) liegt.

8. Vorrichtung nach Anspruch 1, **dadurch gekennzeichnet, dass** die ersten Nockeneinrichtungen (20) eine profilierte Ringnut (26) aufweisen, die um die Welle (4) in einem festen Element (7) ausgeführt ist, dessen Wände an die leerlaufende Radeinrichtung (23) angepasst sind.

9. Vorrichtung nach einem der vorangehenden Ansprüche, **dadurch gekennzeichnet, dass** sie mindestens vier Zangeneinrichtungen (5), vorzugsweise zwölf, aufweist.

10. Vorrichtung nach Anspruch 1, **dadurch gekennzeichnet, dass** die Zangeneinrichtungen (5) länglich ausgebildet sind oder L-Form besitzen, so dass sie über sich eine Hülllage aufnehmen können, um zu vermeiden, dass sich die Positionierungselemente der Lage störend auf die Vorrichtung auswirken.

## Revendications

1. Dispositif pour déplacer un article (2) à emballer au moyen d'une machine, comprenant un corps de support (3) fixé de manière centrale sur un arbre de rotation vertical (4), le dispositif (1) étant prévu avec au moins un moyen de pince (5) raccordé, pour tourner avec lui, au corps de support (3) et prévu avec au moins deux mâchoires (6, 7) et avec des moyens d'ouverture (8) raccordés à au moins l'une des mâchoires (6, 7) pour maintenir et pour libérer l'article (2), le au moins un moyen de pince (5) est raccordé au corps de support (3) au moyen de moyens de rotation (9) respectifs pour faire tourner ledit au moins un moyen de pince (5) et l'article maintenu ainsi, autour d'un axe radial par rapport au corps de support (3) ; lorsque l'article, dans une position d'entrée prédéterminée faisant face à l'au moins un moyen de pince (5), est positionné entre les mâchoires (6, 7) dudit moyen de pince ouverts, au moins l'une desdites mâchoires le saisit suite à la fermeture de ladite au moins une desdites mâchoires réalisées par les moyens d'ouverture (8) ; le corps de support (3) et les moyens de rotation (9) font tourner l'au moins un moyen de pince (5) et l'article (2) respectivement autour de l'axe vertical et de l'axe radial du corps de support jusqu'à ce que l'article atteigne une position prédéterminée et une orientation de sortie prédéterminée, dans ladite position et orientation prédéterminées, les moyens d'ouverture (8) ouvrent le moyen de pince (5) libérant l'article correctement positionné pour les usinages successifs ; ledit dispositif (1) étant **caractérisé en ce qu'**au moins une première mâchoire (6) de chaque moyen de pince est fixée sur une extrémité d'un bras formé (14) articulé de manière centrale au moyen d'un premier pivot (16) et prévu, sur l'extrémité opposée, avec un premier joint (17) pour un second joint (18) d'une extrémité externe d'un moyen de tige (19) des moyens d'ouverture (8), axialement entraînés par des premiers moyens de came (20), l'extrémité interne dudit moyen de tige (19) des moyens d'ouverture (8) est raccordée au moyen de paliers d'une manière à rotation libre à un moyen de couplage (22) ayant un moyen de roue folle (23) mis en prise sur les premiers moyens de came (20), ledit moyen de couplage (22) étant contraints d'effectuer un mouvement de translation radial par au moins une broche radiale (24), coulissant dans un boîtier (25) dudit moyen de couplage (22) et fixé sur le corps de support (3) ou vice versa.

2. Dispositif selon la revendication 1, **caractérisé en ce que** les moyens de rotation (9) comprennent un élément rotatif (10) raccordé au corps de support (3) au moyen d'un moyen de raccordement (11) dotés de paliers (30) pour la libre rotation dudit élément rotatif (10) autour d'un axe radial ; ledit élément rotatif (10) étant prévu avec des moyens de transmission (12) pour le mouvement autour de l'axe radial et avec des moyens de support (13) pour le moyen de pince (5) auquel ledit mouvement rotatif est transmis.

3. Dispositif selon la revendication 2, **caractérisé en ce que** le bras formé (14) est articulé de manière centrale sur un trou (15) pour le premier pivot (16) réalisé dans les moyens de support (13) de l'élément rotatif (10).

4. Dispositif selon la revendication 1, **caractérisé en ce qu'**au moins une seconde mâchoire (7) de chaque moyen de pince est fixée aux moyens de support (13) de l'élément rotatif (10).

5. Dispositif selon la revendication 1, **caractérisé en ce que** la première mâchoire (6) comprend une lamelle souple adaptée pour réaliser un contraste élastique sur le produit.

6. Dispositif selon la revendication 1, **caractérisé en ce que** le moyen de tige (19) coulissent à l'intérieur d'une cavité axiale (21) de l'élément rotatif (10).

7. Dispositif selon la revendication 2, **caractérisé en ce que** les moyens de transmission (12) de l'élément rotatif (10) se composent d'une première roue dentée mise en prise sur une seconde roue dentée (29) d'un élément fixe (27) et dont le centre se trouve sur l'axe de l'arbre de rotation (4).

8. Dispositif selon la revendication 1**, caractérisé en ce que** les premiers moyens de came (20) comprennent une rainure annulaire profilée (26) réalisée autour de l'arbre de rotation (4) dans un élément fixe (27) dont les parois correspondent au moyen de roue folle (23).

9. Dispositif selon l'une quelconque des revendications précédentes, **caractérisé en ce qu'**il comprend au moins quatre moyens de pince (5), de préférence douze.

10. Dispositif selon la revendication 1, **caractérisé en ce que** les moyens de pince (5) sont allongés ou en forme de « L » de sorte qu'ils peuvent recevoir, au-dessus d'eux-mêmes, une feuille d'emballage évitant que les éléments de positionnement de ladite feuille n'interfèrent avec le dispositif.
